# EUROPEAN PATENT APPLICATION

(11) **EP 2 257 025 A1**
(43) Date of publication of application: **01.12.2010**
(21) Application number: 09161248.1
(22) Date of filing: 27.05.2009
(51) Int. Cl.: H04L 29/06

(54) **System and method for establishing reliable communication in a connection-less environment**

(71) Applicant: ST-Ericsson SA, 1228 Plan-les-Ouates (CH)
(72) Inventor: Radulescu, Andrei, 5655 AK Eindhoven (NL); Van den Hamer, Peter, 5583 XD Waalre (NL)
(74) Representative: Bird, William Edward

(57) **Abstract**

The establishment of reliable communication in particular in an environment of the mobile industry processor interface where communication is taking place based on the Unified Protocol is described. In this case based on the timer at the sender (IN) and based on maintaining an originator of a message at the receiver (TG) certain precautions are taken that messages are exchanged correctly and only once an acknowledgement is received from the sender, that a first and a second message have been exchanged correctly a maintained originator at the receiver is released.

The same method can also be applied to sending a plurality of messages in sequence by using sequence numbers and replying to them in the same manner. In this case the timer is always restarted, once the message as a first type of message is sent from the sender side and an acknowledge is sent after the last second type of message with a highest sequence number has been received from the receiver side. With the method and the system according to the present invention it is possible to implement the configuration protocol of the Unified Protocol even in a case where a connection-less service which is faster to use is selected. The method according to the present invention may be triggered by a bit that is set in a protocol data unit as one of the reserved bits (310) in the header there.

## Description

The present invention relates to electronic multicomponent systems, methods, systems, devices and software for establishing reliable communication in a connection-less environment.

### Technical Background

In modern electronic multicomponent systems it is important, that all the electronic components that are used to configure a system can be seamlessly integrated and are able to communicate with each other, no matter which manufacturer originally built the respective component. In order to allow for such type of integration often various manufacturers form a group or an alliance to define certain standards for components and interconnects as well as interfaces of the target system. Such an alliance is the Mobile Industry Processor Interface alliance (MIPI^{®}). At present around 150 manufacturers form part of this alliance. Technical details are kept mostly confidential within the members of the alliance. Certain information is available at http://www.mipi.org/ on the World Wide Web.

With increased speed and processing capabilities of future components it is of utmost importance, that the interconnects between future systems allow for high communication bandwidth. Therefore, often high speed serial interfaces like USB or USB2 are used. The MIPI^{®}alliance has defined UniPro^{SM} as a serial high speed link to connect e.g. chips in mobile device. Currently UniPro^{SM} is released in a standard 1.0. More information related to this standard, which in some details is also kept member confidential in the MIPI^{SM} alliance is available at http://en.wikipedia.org/wiki/UniPro on the World Wide Web.

UniPro^{SM} is in particular intended to allow manufacturers of future mobile phones the mixing and matching of components with different functionalities that are supplied by different vendors in order to have a maximum flexibility to create new devices. A UniPro^{SM} standard- or Unified Protocol is aimed at chip-to-chip networks using high speed serial links. It is defined to be a general purpose communication protocol that solves the general interconnect problems, such as error handling, flow control, routing or arbitration.

Generally for networks two types of communication services are conceivable: A connection-less (CL) service and a connection oriented (CO) service. The type of connection-oriented communication requires previous to the communication that the connection is to be set up in order to allocate the resources required for a secured communication. In particular this communication set up avoids that one of the buffers from a component participating in the communication overflows or underflows. It is however also conceivable, that a setup of a communication requires resources and time and a certain communication overhead, in order to issue the flow control and manage the connection during data exchange. Another type of service, the connection-less service contrary to the connection oriented service is faster, because no connection needs to be set up. On the other hand, however, due to the fact, that no connection is set up, a communication connection that is operated by a connection-less service may loose data at the edges of the network due to the fact, that the components involved in the communication are not controlled, and thereby buffer underflows or overflows may take place, which can lead to data losses.

In some communication cases however the applied communication service needs to be quick and reliable at the same time. In the case of the Unified Protocol this may be for example the configuration protocol which here is required for discovery and enumeration.

Document US 2005/0240696 A1 discloses a data transfer control device and electronic instrument. Here a data transfer control device includes a transceiver which receives a request packet from a partner device connected with the serial bus and a link controller which analyzes the received request packet. The received request packet includes a response request field for informing whether or not to perform a handshake transfer using an acknowledge packet. The link controller directs transmission of an acknowledge packet for the request packet when a response request value indicating that response is requested has been set in the response request field of the received request packet. The communication according to this document requires a central control device and subsequent evaluation of communication contents which renders the communication rather complicated and makes it time-consuming.

### Summary of the Invention

It is an object of the invention to provide a system, method, device or software for establishing reliable communication in a connection-less multicomponent environment on the basis of a reliable network. This object is achieved for a method according to claim 1 and for a system according to claim 13. Advantageous further developments of the invention are defined in the dependent claims.

A method for establishing reliable communication according to the present invention demonstrates the particular advantage, that no coordinating device for the communication is required. Due to the strict follow-up of messages according to the method of the present invention and in particular the processing at the receiver to at least maintain the originator until a third type of message is received, the complete communication flow is ensured without the necessity of a large communication overhead.

Beneficially according to a further embodiment of the present invention a second first type of message is discarded at the receiver while the original of the first type of message is still maintained. This allows a fast communication and avoids double processing of incoming messages on the receiver side.

Advantageously according to a further embodiment of the present invention in case the second type of message is not received within a predefined time period the sender resends the first type of message. By this processing it is advantageously ensured, that once the component on the receiver side is not capable of processing a first type of message it will be automatically resent.

Expediently according to a further embodiment of the method according to the present invention a timer is started on the sender side, to measure the predefined time period. Timers are often used in integrated circuits and thus they provide a cheap and reliable means to time a communication protocol. Preferably the timer is started, as soon as the first type of message is sent from the sender.

Beneficially according to a further embodiment of the method of the present invention the timer is started each time a first type of message is sent at the sender. Thus a complete control of the communication flow is possible even when a sequence of first type of messages is sent from the sender side.

In a particular advantageous fashion a further embodiment of the method according to the present invention allows it to sequentially send at least two first type of messages and handle the associated second type of messages also in a sequential order. Thus communication of a plurality of messages from a sender to a receiver in a reliable manner is much facilitated.

Beneficially according to a further embodiment of the method according to the present invention as unique identifier associated to sequential messages sequence numbers are used that respectively correspond to the first type of messages and are associated to respective second type of messages. This allows the embodiment of the method according to the present invention to keep easy track of the communication in progress in terms of the sequential messages having been transmitted and also allows for an easy error tracking in particular if resuming communication is needed after the receiver was not able to deal with one incoming first type of message having a certain sequence number.

Expediently according to a further embodiment of the method according to the present invention once communication has failed between the sender and the receiver once the predefined time period has expired communication is restarted by issuing a first type of message having the next higher sequence number as a previously received second type of message. By this a continuous communication flow is secured even in the case the receiver is not capable of dealing with a certain first type of message or a plurality thereof.

Of particular advantage is a further embodiment of the method according to the present invention wherein the first type of message is a request, respectively the second type of message is a response, respectively the third type of message is an acknowledge. By this convention reliable communications can be established using a 3-way handshake.

Expediently a further embodiment according to the present invention is implemented in a connection-less environment based on the connection-less service of the Unified Protocol. This type of implementation advantageously makes use of the reliable nature of the network connecting the chips and in this way the protocol only has to ensure, that at the edges of the network no buffer underflow or overflow takes place. A reliable network like this allows for a very small protocol overhead to ensure reliable communication.

Expediently a further embodiment of the embodiment according to the method of the present invention uses as a request a GET message and as a response a SET message. In this manner only little adaptation needs to be performed to the Unified Protocol if the configuration protocol according to UniPro^{SM} is to be adapted.

Advantageously according to a further embodiment of the method of the present invention the particular execution of the method is triggered by a single reserved bit. This allows to use a standard protocol like the Unified Protocol even in its connection-less implementation and only start the reliable communication if needed and by using a reserved bit, no changes to the standard protocol have to be implemented which allows an optimum adaptation of the method according to the present invention to the standard of the Unified Protocol.

The present invention also provides a system for establishing reliable communication in a connection-less environment,
- having a first and a second component connected by a network (RN) wherein the first component is adapted as a sender
- and the second component is adapted as a receiver, wherein the system is adapted so that the sender sends to the receiver a first type of message;
- the receiver in case of being able to handle the first type of message sends to the sender a second type of message and at least maintains an originator of the first type of message;

- the sender when receiving the second type of message sends to the receiver (TG) a third type of message; and
- the receiver receiving the third type of message releases the originator, whereby reliable communication is established.

Preferably, if the sender does not receive the second type of message within a predefined time period the sender is adapted to resend the first type of message.

Optionally, the sender has a timer (505). The sender is adapted to start the timer to measure the predefined time period. For example, the timer is started each time a first type of message is sent, and/or wherein the timer is stopped each time a second type of message is received.

The receiver can be adapted such that if it receives a second first type of message while maintaining the originator, the second first type of message is discarded.

The sender can be adapted to send at least a first and a second first type of message in a timed sequence respectively marked by a first and a second unique identifier.

Preferably the receiver is adapted to send a first and a second type of message in the timed sequence that are respectively marked in association with the first and second unique identifier.

Preferably, the first and second unique identifier are a sequence number counting the number of messages; and
wherein only the first type of message having the correct sequence number in the counted number of the first type of messages is handled at the receiver.

The sender can be adapted to start sending a first type of message having the next higher sequence number as the one of the previously received second type of message , in case the predefined time period has expired between two subsequent first type of messages.

In any of the embodiments of the invention, the first type of message can be a request, and/or the second type of message can be a response and/or the third type of message can be an acknowledge.

The request can be a SET request or GET request message and/or the response is a SET response or GET response message and preferably the system for connection-less communication is based on a connection-less service of the Unified Protocol. Yje system may be adapted to set a reserved bit in a header of a protocol data unit of the Unified Protocol.

Accordingly, of particular advantage is the system according to the present invention using a minimum configuration of two chips that are interconnected by a reliable network wherein one of the components acts as a sender and implements the parts of the method of the present invention of the sender whereas the second component acts as receiver and implements the respective method steps of the method according to the present invention associated to the receiver.

Advantageously according to a further embodiment of the system of the present invention one of the components is a microprocessor because accordingly reliable communication between a microprocessor and another component can be established even in a connection-less environment and using as few communication overhead as possible.

Expediently according to a further embodiment of the system of the present invention this system is implemented in a mobile device. As the communication overhead of the system according to the present invention is as small as possible the mobile device usually having a small processor and small memory requires no large share of the processors computing capacity to handle the communication between the various chips inside and thus a faster communication inside the mobile device is ensured.

The present invention also includes software products. Which may be stored on a signal storage medium such as a machine readable optical recording means, e.g. a CD-ROM, DVD-ROM; a solid state memory, e.g. a USB stick; a magnetic disk product such as hard disk, or diskette, or a magnetic tape memory.

### Brief description of the Drawings

Below examples and embodiments of the present invention are further explained by use of examples in drawings wherein:
Fig. 1 shows an example of the format of a protocol data unit used in connection-oriented communication,
Fig. 2 shows an example of the format of a protocol data unit used in a connection-less communication,
Fig. 3 shows an example of a configuration message format,
Fig. 4 shows a first example of establishing reliable communication,
Fig. 5 shows a second example of establishing reliable communication,
Fig. 6 shows a third example of establishing reliable communication,
Fig. 7 shows a first example of establishing reliable communication by sending and receiving a sequence of messages,
Fig. 8 shows a second example of establishing reliable communication by sending and receiving a sequence of messages,
Fig. 9 shows a third example of establishing reliable communication by sending and receiving a sequence of messages, and
Fig. 10 gives an example of an embodiment of a system according to the present invention
Fig. 11 shows a processing engine that can be used with the present invention.

### Description of the Illustrative Embodiments

Preferred embodiments of the present invention will now be described in detail with reference to the annexed drawings. In the following description, a detailed description of known functions and configurations incorporated herein has been omitted for conciseness.

Although, the present invention will be described with respect to particular embodiments and with reference to certain drawings, the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. Similarly, it is to be noticed that the term "connected", also used in the claims, should not be interpreted as being restricted to direct connections only, although "connected" includes a direct connection which may be advantageous. The term "coupling" should also be interpreted as not being limited to direct connections. Reference throughout this specification to "one embodiment" or "an embodiment" means that a particular feature, structure or characteristic described in connection with the embodiment is included in at least one embodiment of the present invention. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. Furthermore, while some embodiments described herein include some but not other features included in other embodiments, combinations of features of different embodiments are meant to be within the scope of the invention, and form different embodiments, as would be understood by those in the art. In the description provided herein, numerous specific details are set forth. However, it is understood that embodiments of the invention may be practised without these specific details. In other instances, well-known methods, structures and techniques have not been shown in detail in order not to obscure an understanding of this description.

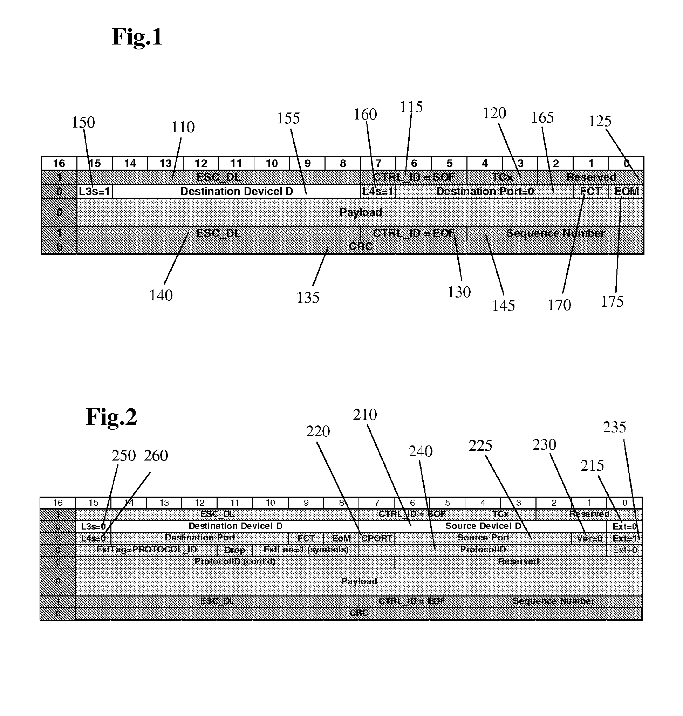

Fig. 1 gives an example of an embodiment according to the prior art of a protocol data unit that is used in connection-oriented communication for instance in the Unified Protocol 1.0. In order to establish a connection over a network or a component bus it is necessary that before communication can be established the connection must be present between the two communicating devices in order to make it feasible to transfer data back and forth. For instance, a device access port for a connection is called CPort. A state of such a CPort contains for instance a device ID and a CPort of the pier device. It may further contain the traffic class the connection is mapped to and a state according to the end-to-end flow control. As all this information related to the state is contained in the CPort in the connection-oriented communication when transmitting data, a device willing to transmit the data only needs to be supplying the data in order to establish communication.

Here for instance in Fig. 1 a protocol data unit is shown according to the ISO/OSI layer 2 which is called a frame. The header of this frame consists of an escape byte 110, which will be converted in an escape symbol on the physical layer and denotes a control symbol. Furthermore a control ID field is contained, which in case of the header of the data frame is an SOF -Start Of Frame- indicator 115. Furthermore a class of traffic TCx 120 is listed, for which according for instance UniPro^{SM} 1.0 the values 0 and 1 are allowed and above that it contains for instance 3 reserved bits 125. In addition a trailer of the frame consists of two symbols the EOF control symbol and the CRC symbol in order to perform error detection as a technique well-known in the art. The EOF symbol consists for instance of: an escape byte - ESC_DL- 140 in accordance with the SOF control symbol that was used in the header. Furthermore a symbol control ID field is contained which in case of this shown data frame trailer is an EOF -End Of Frame- 130. Furthermore the frame sequence number 145 is listed in the trailer. In addition the protocol data unit of Fig. 1 shows the ISO/OSI protocol layer 3 protocol data unit which is called packet in UniPro^{SM} and the layer 4 protocol data unit which is called segment in UniPro^{SM}. Fig. 1 shows an example where layer 3 and 4 both have short 1-byte headers and are not terminated by a trailer. The header of the layer 3 protocol data unit consists for instance of an L3s bit which in this case is set to 1, 150 that in this embodiment indicates a short L3 header and a device ID of a pier device, which for instance could be used for routing in UniPro^{SM} 2.0, 155. As shown in Fig. 1 the header of the layer 4 protocol data unit consists for instance of the L4s bit which in this case is also set to 1 and like with the layer 3 protocol data unit indicates a short header of the layer 4 protocol data unit, 160. Furthermore Fig. 1 shows the destination CPort 165 and an FCT bit which is used to control the data flow and in this case to transmit end-to-end flow control units to the pier CPort, 170 as well as the EoM bit which in this application may be used to indicate an end of a message, 175. In case of communication through a CPort by using a connection-oriented service an application only delivers data and indicates the message boundaries. The remaining information which is required in order to make the transfer of the data possible is filled in by for instance UniPro^{SM} using the CPort state.

Fig. 2 shows an example of the format of a protocol data unit that may be used in connection-less communication for instance according to UniPro^{SM} 1.5. As already indicated by the name of the type of communication no connection will be established when data is transmitted according to this service. For instance, whenever an application intends to send data the data is included in packets and sent via the packets through the network to its intended destination. In comparison to the connection-oriented communication the connection-less communication needs more information in order to direct the packets to their proper destination. Such information could be for instance the source port, the source device ID, a protocol ID, and so on, which all need to be included in the packet and segment headers in order to provide sufficient routing information. Contrary to that these type of parameters are part of the connection state in the connection-oriented communication.

Furthermore due to the fact that no connection exists also no end-to-end flow control is possible. This means, that at the connection device data could be discarded because the destination device could not accept data at the time they arrive there, due to for instance a buffer overflow. Advantages of a connection-less communication are however the ability to be able to send data in a very rapid fashion. Above all the time that is needed to build up and establish a connection can be saved. In UniPro^{SM} for instance a device access point to a connection-less service is called RPort.

The additional information that is needed in order to transfer a packet according to a connection-less service can immediately be conceived by comparing the sizes of the formats of the protocol data unit of Fig. 1 and of Fig. 2. In addition to the layer 2 header -first symbol- and trailer -last two symbol- of the protocol data unit that is also used in the connection-oriented service and therefore the header and the trailer of layer 2 are identical it contains further information. The protocol data unit used to transmit connection-less data contains an extended header of layer 3, identified by the L3s bit 250 set to 0. The extended header also includes the source device ID field 210 in order to indicate the origination point of the data packet, as well as an one Ext bit per layer 3 symbol which, if set to one indicates the presence of another symbol on layer 3, 215 and otherwise indicates the end of the header of layer 3. In the example of Fig. 2 layer 3 does not contain any extensions.

Furthermore the header of layer 4 is extended the L4s bit 260 is set to 0 and also includes for instance a CPort bit 220 in order to indicate if the segment addresses a CPort -CPort bit set to 1- or an RPort -CPort bit set to 0- which is used to discriminate between a connection-less and a connection-oriented service. Moreover the source port 225 and a Ver bit 230 which in this case is set to 0 that indicates a first generation version of the protocol data unit which allows the option to define more developed layer 4 protocol data units in the future. In addition one Ext bit per layer 4 symbol, which in this case is set to 1 and indicates the presence of another symbol on the layer 4 and otherwise indicates the end of the header of layer 4. In the example shown above there is one layer 4 extension for the protocol ID 235. Furthermore a protocol ID field is contained, 240, which for instance indicates the communication protocol used by the application involved.

In order to perform connection-less communication an application has to send data messages that fit e.g. within a UniPro^{SM} frame. In the same manner as handled in the connection-oriented service in the connection-less service the message boundaries are set by the application in question. Above that the application also has to make sure that a destination device ID and RPort is specified and optionally also the protocol ID. For instance, the messages may be included in the packets without being segmented before they are sent through the network. At the receiving side for instance the application also receives the source device ID and the source RPort in addition to the message content itself.

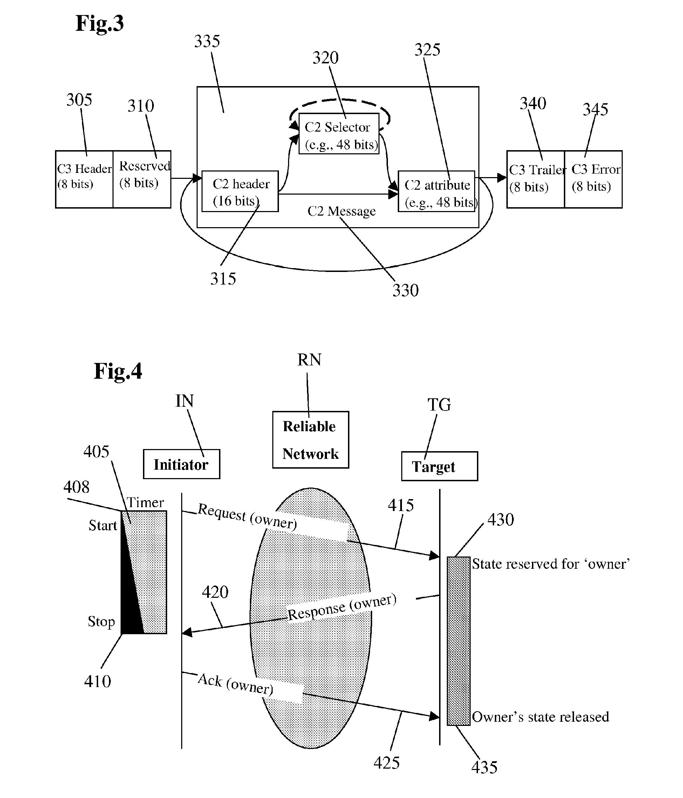

Fig. 3 shows an example of a configuration protocol which may be used in a system the devices of which are equipped with the mobile industry processor interface and use the Unified Protocol to communicate over the component bus, respectively network connecting the various components of the system in order to configure certain components over the network and to be able to perform a required task or to execute a command. Generally such a configuration protocol of e.g. a Unified Protocol may include two basic commands like SET and GET in order to be able to set and read attribute values. These types of commands are for instance issued by a so-called initiator and executed by a target. In more general terms a SET and GET command may translate into a request message and carrying the command and its parameters, and a response message acknowledging the arrival and the execution of the command. Such individual commands may be called e.g. in the Unified Protocol C2 request and C2 response. As defined in the particular example of the Unified Protocol all C2 messages include:
- A type field indicating the configuration message type in terms of a SET command or a GET command respectively a SET response or a GET response.
- A length field which may be optional and indicates the length in bytes of the attribute value that is being SET/GET. If for instance length is missing, a previous length or a default value for instance of 2 bytes may be assumed, and
- An attribute field that may indicate the identifier of an attribute that is to be SET/GET.

In addition in the case of a SET message the request may also include the value itself, which may spawn over several symbols. For instance, the GET message may have a different value for the command field and no value field.

In addition the C2 response messages may again be identified by a type field for instance SET_SUCCESS, GET_SUCCESS, FAILURE. In the SET_SUCCESS case, for instance no additional fields are required. For a GET_SUCCESS, a value specified in the GET request is returned in a value field. In the case of FAILURE, there may be a failure reason field, which might indicate the reason a command has failed for instance wrong device ID, wrong RPort, non-existing attribute, access to attribute temporarily locked by another device, value outside the attribute range for a set command and so on.

In order to efficiently use the network both the C2 request commands and the C2 responses may be provided in a grouped single request and response message in a combined format respectively. For instance, in UniPro^{SM} these combined configuration messages are called C3 configuration messages. According to the message format that is shown in the embodiment of Fig. 3 a C3 configuration message format includes a C3 header 305, which includes the C3 type in terms of a request or a response and for instance the critical flag, which may if present allow the C3 message to be interleaved with other C3 messages or not at the target.

One or more C2 messages which in case the C3 type is indicated as request are requests and otherwise if indicated in the type as response are responses 330 which in itself contain a C2 header 315, a C2 attribute 325 as well as C2 selector 320. Above that the C3 message contains a trailer 340 which may encode an error code, and, in case of a C3 response for instance may specify the last executed command 345 which is in particular useful when an error occurred. Prominently it can be identified the reserved bits marked by reference numeral 310 which can be used totally conforming to the specified configuration protocol according UniPro^{SM} to trigger the execution of a particular communication method according to the present invention in order to establish reliable communication in a connection-less environment.

Fig. 4 shows a first example of a method for establishing reliable communication in a connection-less environment according to an embodiment of the present invention. As can be depicted from the drawing there is shown a sender IN a connecting network RN which could be a reliable network preferably working according to the Unified Protocol which means it is a reliable network in a sense that for instance there is no data corruption, loss or duplication in the network itself and as well an ordered network indicating for instance that all data is delivered at the destination in the same order as it has been sent by the source.

The method according to the invention overcomes the problem, that in case of layer 4 data units which are transmitted as messages or datagrams those can be lost due to a buffer overflow at the receiver TG although the network is working reliable. If the method according to the invention is applied configuration commands are still executable in a reliable fashion and for instance all C2 commands are executed in order and once and only once even in such a case. These circumstances also discriminate the method according to the present invention from supposedly similar 3-way or 4-way handshakes that are used in TCP or SCTP in the course of setting up or closing a connection. According to this embodiment of the present invention the reliability of the transmission of commands for instance in the case of a configuration according to the Unified Protocol is provided on the C3 level in that for instance one of the reserved bits in the C3 header is used as a trigger flag, respectively as a reliability flag. Preferably the method according to the present invention is executed in case this flag is set. In other cases for instance the method is not executed and thus the bandwidth of the network RN can be used up to its optimum. The reliability in for instance the transmission of configuration commands may for example be achieved by using a 3-way handshake which generally consists of a request, a response and in addition a configuration acknowledgement. In case of the configuration according to UniPro^{SM} the response and the request are for instance mandatory in the configuration transaction.

As shown in the embodiment of Fig. 4 when the initiator sends a first type of message 415, for instance a request, at the initiator a timer 405 is started. The timer for instance is set to measure a time period starting from 408 and having a predefined value. In this case a sender sending the first type of message 415 keeps a copy of it. One purpose of the timer for instance is to help to protect against a loss of the first type of message at the receiver side TG. On the other hand it has to be taken into account, that a response from the receiver TG in form of a second type of message 420 needs some space in the memory of the sender IN and thus accordingly an appropriate quantity of memory space needs to be reserved. In this manner the sender may always be able to accept a second type of message as a response from the receiving side TG. At the time the receiver TG receives the first type of message wherein for instance an owner is identified according to its device ID and port it starts to reserve a state for that owner in at least maintaining the owner at the receiving side TG. The measure to maintain the owner serves for instance the purpose to filter duplicates of the first type of message in case a timeout at the sender has occurred. A timeout at the sender may occur, once the timer 405 has expired in counting up a certain predefined time period. Then at the sender IN it is assumed, that the receiver TG has not received the first type of message 415 and the first type of message is resent as stored in the memory. After having received the first type of message in case the receiving side TG is able to handle the first type of message it is performing the corresponding activities as indicated by the message content and sends a second type of message 420 for instance as a response back to the sender IN. Once the second type of message arrives at the sender IN the timer is stopped and for instance the backup duplicate copy of the first type of message may be discarded. Receiving the second type of message and stopping the timer at 410 the sender IN sends a third type of message for instance an acknowledge 425 to the receiver TG. With receiving the third type of message 425 the 3-way handshake is complete and at the receiver side TG the maintenance of the owner is released at 435.

In the embodiment shown in Fig. 4 only one single outstanding first type of message is shown to be handled between the pair of sender and receiver and no second type of message can be received at the receiver once no third type of message has been sent from the sender.

It is however also conceivable to implement an embodiment where a receiver can receive a multitude of first type of messages from different senders at the same time in case provisions are taken, that the receiver is capable of maintaining the originator for each first type of message and the hardware implementation takes account of this effect. In this case for instance the number of concurrent first type of messages at the receiver may be limited due to the number of available storage locations for maintaining different owners respectively originators. Not being capable of maintaining another originator may be the reason for not being able to establish a reliable communication between the sender and the receiver. The third type of message, in case it is an acknowledgement according to the UniPro^{SM} may be one of the C3 messages which are identified in the C3 type in the C3 header.

It is also conceivable, that the sender and the receiver are exchanged, indicating that the receiver of Fig. 4 TG starts with sending a first type of message to the sender IN. In this case the method is executed the other way round as described above. Generally, such type of establishing reliable communication between a sender and a receiver may be applied to any type of client/server protocol where a request of a client is to be responded by a server in issuing a corresponding message in that a third type of message in this case an acknowledgement is added in order to realize a 3-way handshake.

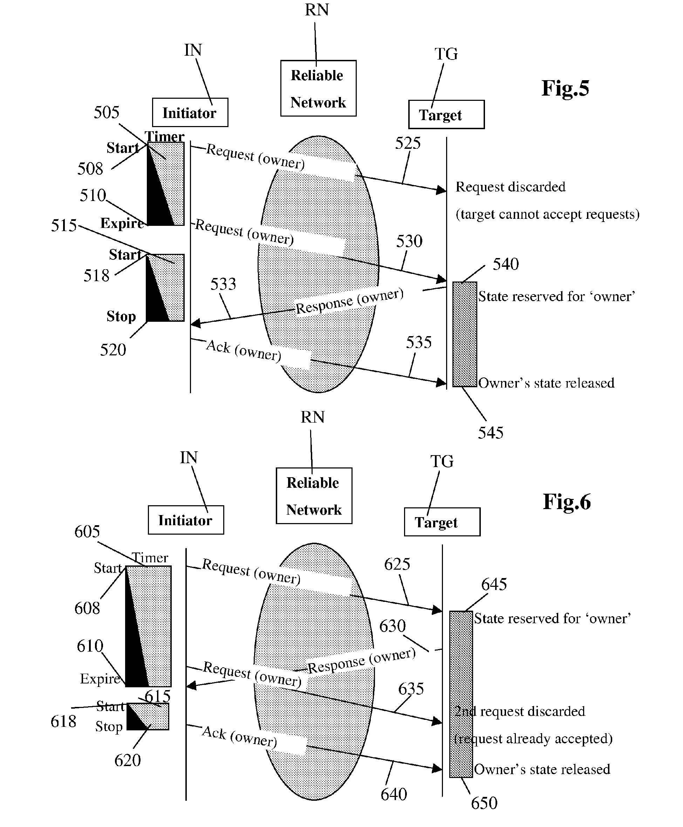

The example of an embodiment according to the present invention depicted in Fig. 5 illustrates a case, where a first type of message may not be accepted at the receiver and hence is discarded. The reason for discarding a first type of message as mentioned above may be a buffer overflow at the receiver or the lack of capability to maintain the originator of the message. Further reasons may be found related to the hardware at the receiver side and several failures which could cause discarding of the message are conceivable. In case the first type of message 525 is sent from the sender IN to the receiver TG and the receiver is busy for some reason the first type of message is discarded. As discussed above when explaining Fig. 4 a timer is started when sending the first type of message at the sender IN 505 and the timer counts a predefined time period here in this case from 508 to 510. In case no second type of message arrives at the sender IN during this time period it is assumed at the sender side that the first type of message could for any reason not have been handled at the receiver side TG. After expiration of the timer at 510 the copy of the first type of message is resent to the receiver TG as 530. Then the receiver TG being able to handle the first type of message as already explained in the context of Fig. 4 maintains the originator of the message 530 and sends a second type of message 533 to the sender. The message arriving at the sender leads to stopping of the timer at 520 and for instance discarding of the copy of the first type of message as well as to sending of a third type of message 535 to the receiver which in accordance with the above explained leads to a release of the originator at 545 which is maintained at the receiver TG.

Fig. 6 illustrates another example of an embodiment of a method according to the present invention for establishing reliable communication in a connection-less environment. In this case a delay or malfunction in the processing at the receiving side or a delay in transmission (e.g. Due to link-level retransmissions caused by transmission errors) of the second type message 630 may take place. This may lead to a situation where the second type of message is sent too late from the receiver TG to the sender and the timer 605 has already expired. As explained above a first type of message 625 is sent from the sender IN to the receiver TG. The originator of the message 625 is maintained at the receiver indicated by 645 and in response to the first type of message a second type of message 630 is sent back to the sender 630. In this case however the timer had already expired at 610 and been restarted at 618 going along with sending a second first type of message 635. This second first type of message arriving at the receiver TG leads to no activities, because a second type of message associated to this first type of message and to this originator has already been handled and no associated third type of message has been received. This associated third type of message is then issued once the second type of message 630 arrives at the sender and the timer is stopped at 620 leading to sending the third type of message 640 which at the receiver side causes the originator at the receiver to be released at 650. The third type 640 message is guaranteed to be received by the receiver because the reliable network RN, and the fact that the receiver is in a state where it has reserved resources, such as buffer space, to process the third type message 640.

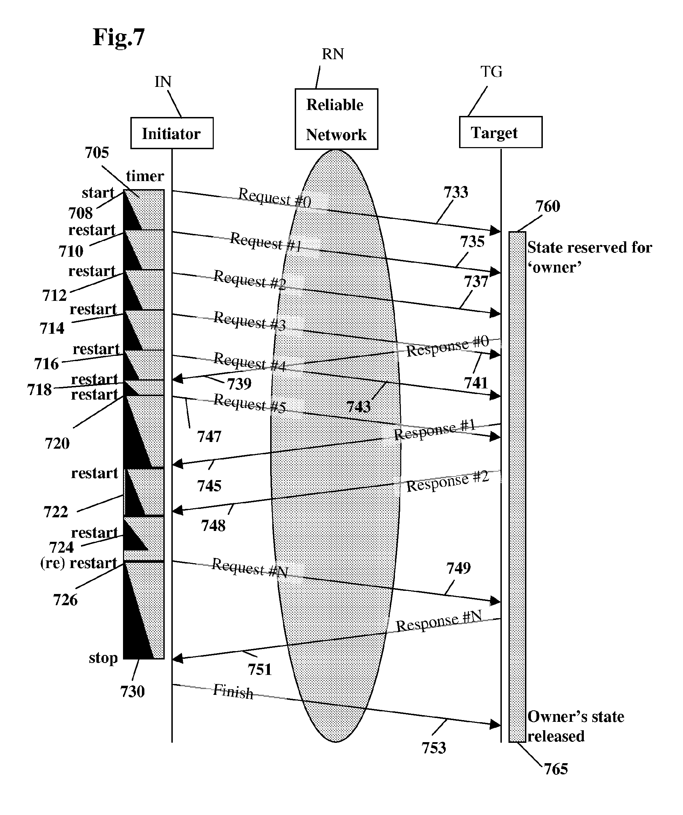

Fig. 7 gives another example of an embodiment of a method for establishing reliable communication according to the present invention. Like before in the figures 5 and 6 messages are exchanged between a sender IN a receiver TG by means of using a reliable network RN. In this case however a plurality of messages is issued from the sender side to the receiver side and a plurality of second type of messages in response to this first type of messages is issued from the receiver side back to the sender side. In order to be able to handle multiple outstanding first type of messages it is evident, that each first type of message needs to be supplied with a unique identifier. For instance, as a unique identifier a sequence number of the first type of message in the sequence of messages may be used. As can be depicted from Fig. 7 the sender IN issues a plurality of first type of messages 733, 735, 737, 741, 743, 747 and 749 and for instance allocates through them sequence number 0 to N. Issuing of this type of messages goes along with keeping copies as previously explained of the respective first type of message and starting the timer 705 each time a first type of message is sent at 708, 710, 712, 714, 716, 720 and 726. The timer 705 is also restarted with each second type message reception at 718, 722 and 724. At the receiver side TG first reception of the first type of message leads to maintaining the originator of the message and responding with second type of messages marked by 739, 745 and 748 until 751. Once the final first type of message 749 is handled appropriately at the receiver TG and leads to a second type of message 751 which arriving at the sender IN stops the timer 730 and leads to for instance discarding of copies of the various messages and issuing an appropriate acknowledge message in form of a third type of message 753 in order to release the originator at the target at 765. It is a matter of implementation if all of the first type of messages are kept at the sender until the final third type of message is issued or if in order to save memory space each time a second type of message arrives corresponding to its unique identifier to a stored first type of message this corresponding first type of message may be deleted. It is also conceivable instead of restarting a single timer to use separate individual timers for each type or first type of message and to keep them individually running until the associated second time of message arrives.

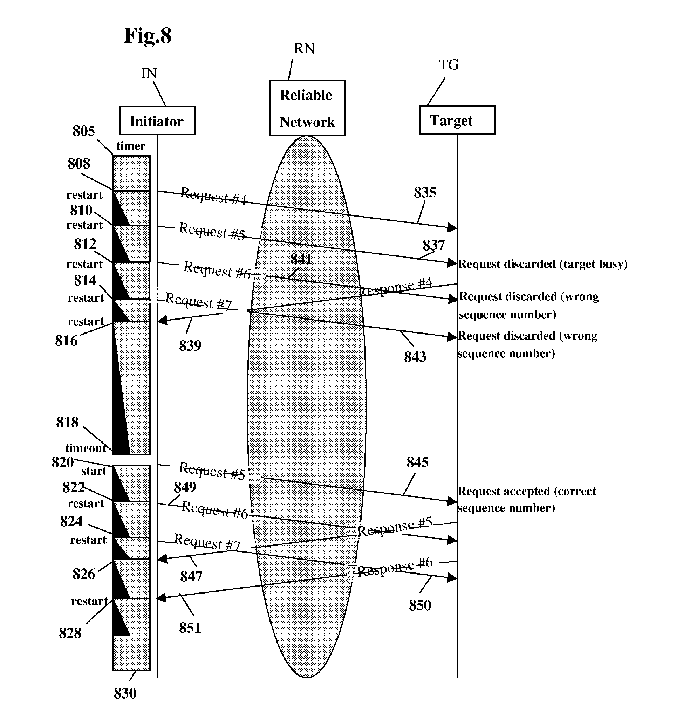

As Fig. 8 shows another example of the embodiment of the method according to the present invention. Problems in the exchange of messages may occur as well on the sender as on the receiver side. In the case of the example depicted at Fig. 8 in the manner as already explained in the context of Fig. 7 from the sender IN first type of messages 835, 837, 841, 843, 845, 849, 850 are sent and in response from the sender TG second type of messages 839, 847 and 851 are sent back to the sender. As previously explained when starting issuing first type of messages a timer 805 is restarted in the sequence of the first type of messages at 808, 810, 812, 814, 820, 822, 824, 826 and 828. In the case of the example shown in Fig. 8 however the receiver TG is not able to process the second type of message 837 which may have an associated sequence number 5 as a unique identifier. This leads to the fact that at 818 the timer expires. In this case at the sender IN it is evaluated, which unique identifier the previously received second type of message had. In this case it may be number 4. Thus it is known at the sender, that the second type of message having the sequence number 4 has been handled correctly at the receiver. This leads at the sender to the conclusion, that the first type of message associated to sequence number 5 as a unique identifier is outstanding and this first type of message is copied from the memory and resent to the receiver as 845. After having been received at the receiver an appropriate second type of message having the same unique identifier is replied to the sender and there also leads to a restarting of the timer at 826. This process continues until the last second type of message is received at the sender IN and a third type of message is sent to the receiver TG which also leads there to a release of the maintained originator of the messages.

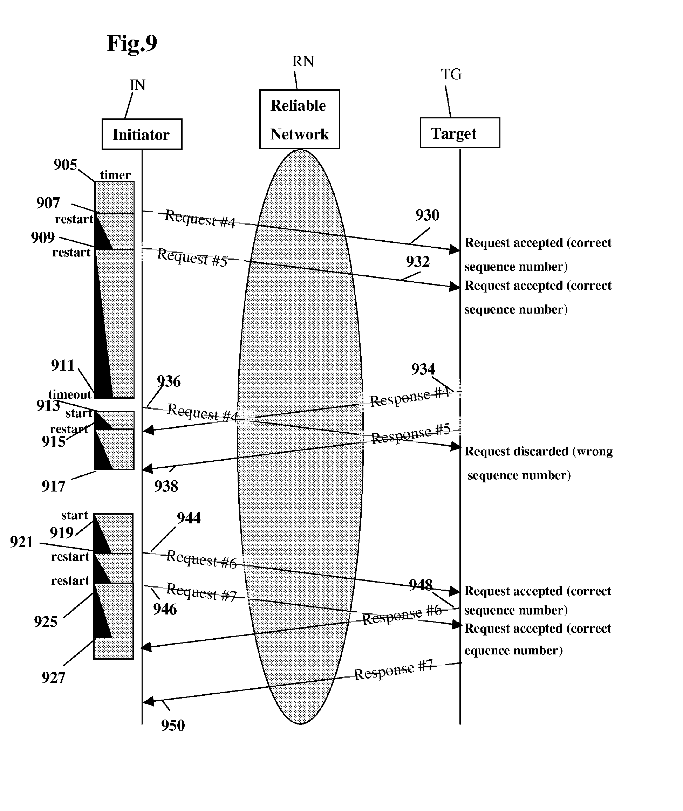

Fig. 9 shows another example of an embodiment of the method according to the present invention, where messages are exchanged between a sender IN and a receiver TG via a reliable network RN. In this case a processing delay or a transmission delay in handling a second type of message 934 at the receiver leads to the fact, that the second type of message 934 arrives too late at the sender IN and the timer 905 has already expired at 911 which causes the sender IN to resend a first type of message 936 in copying it from the associated memory space and transmitting it to the reliable network to its destination TG. For instance, this first type of message may have the sequence number 4. Shortly after the first type of message 930 and 932 has been sent from the sender the second type of message 934 and 938, with sequence number 4 and 5, respectively, arrives at the sender IN causing the timer to be restarted at 915 and stopped at 917, respectively. On the other hand the first type of message 936 for instance having the sequence number 4 arrives at the receiver TG once already the associated second type of message 934 has been sent from the receiver TG to the sender IN. Accordingly the retransmitted first type of message having the same sequence number and marked by 936 is discarded at the receiver because it has the wrong sequence number as sequence number #6 is expected. The first type of message having the correct sequence number 6 and indicated by 944 is sent to the receiver TG and accepted there, because it has the next unique identifier, respectively sequence number up from the previous sequence number of the second type of message 938. The exchange is concluded with transmitting the second type of message having the sequence number 7 indicated as 950 and stopping the associated timer at 927. The rest of the process then ends smoothly as previously described.

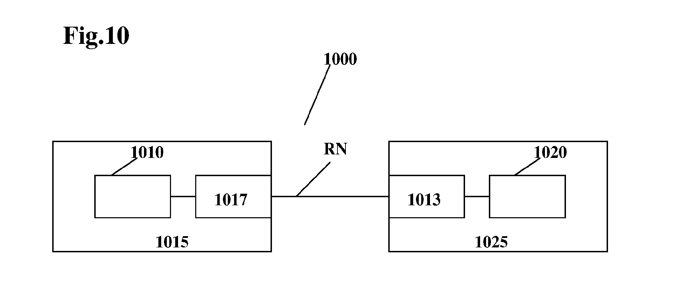

Fig. 10 shows an example of a system 1000 according to the present invention. For instance, a minimum configuration of this system may be represented by a first component 1010 such as an application processor and a second component 1020 such as a peripheral device which are connected by a reliable network RN via a respective interconnect 1017, 1019 for instance a serial interconnect such as UniPro^{SM}. This reliable network may be a bus interconnecting electronic components on a circuit board or in a mobile device and as such component 110 may be a microprocessor and component 120 may be a microcontroller or another active device.

As indicated above, the present invention may be implemented as hardware circuits. However, some parts can be implemented in software in any computer language, run by conventional processing hardware such as a general purpose microprocessor, or application specific integrated circuits for example. Embodiments of the present invention may be implemented as hardware, computer software, or combinations of both.

For example, operation of parts of the system can be under the control of a processing engine such as a microprocessor, e.g. a general purpose processor, an embedded processor, an application specific integrated circuit (ASIC), a field programmable gate array (FPGA) or other programmable logic device, discrete gate or transistor logic, discrete hardware components, or any combination designed to perform the functions described herein. A processor may also be implemented as a combination of computing devices, e.g., a combination of an FPGA and a microprocessor, a plurality of microprocessors, one or more microprocessors in conjunction with an FPGA, or any other such configuration.

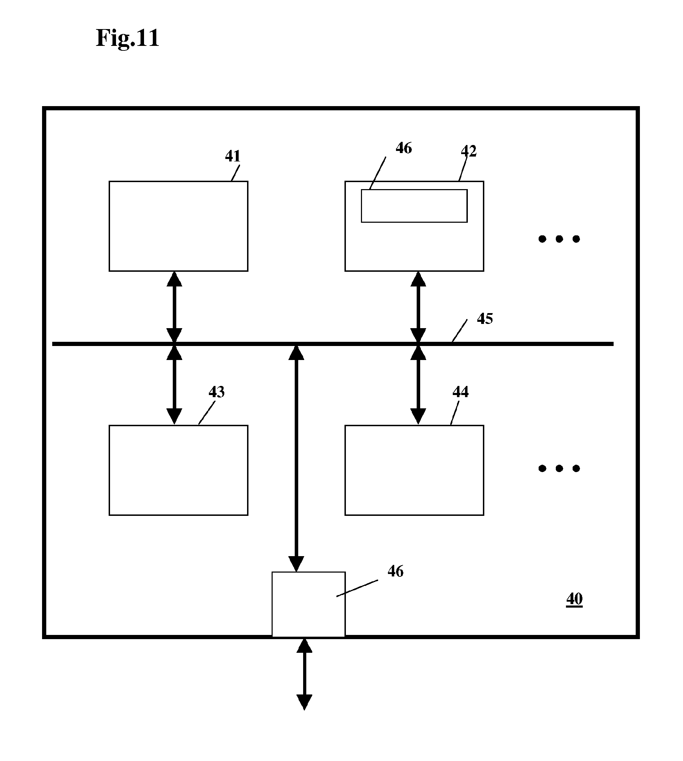

As indicated above the present invention also provides a processing system. The processing system may include a computing device or processing engine, e.g. a microprocessor. Any of the methods described above according to embodiments of the present invention or claimed may be implemented in a processing system 40 such as shown in Fig. 11. Fig.11 shows one configuration of processing system 40 that includes at least one customizable or programmable processor 41 coupled to a memory subsystem 42 that includes at least one form of memory, e.g., RAM, ROM, and so forth. It is to be noted that the processor 41 or processors may be a general purpose, or a special purpose processor, and may be for inclusion in a device, e.g. a chip that has other components that perform other functions. Thus, one or more aspects of the method according to embodiments of the present invention can be implemented in digital electronic circuitry, or in computer hardware, firmware, software, or in combinations of them. The processing system may include a storage subsystem 43 that has at least one disk drive and/or CD-ROM drive and/or DVD drive. In some implementations, a display system, a keyboard, and a pointing device may be included as part of a user interface subsystem 44 to provide for a user to manually input information, such as parameter values. Ports for inputting and outputting data may be included. The processing system includes for instance a UniPro network connection 46. More elements such as other network connections, and/or other interfaces to various devices, and so forth, may be included, but are not illustrated in Fig. 11. The various elements of the processing system 40 may be coupled in various ways, including via a internal interconnect subsystem 45 (e.g., bus, multitude of busses or on-chip-network) shown in Fig. 11 for simplicity as a single bus, but which will be understood to those in the art to include a system of at least one bus. The memory of the memory subsystem 42 may at some time hold part or all (in either case shown as 46) of a set of instructions that when executed on the processing system 40 implement the steps of the method embodiments described herein. The system shown schematically in Fig. 11, can be for establishing reliable communication in a connection-less environment, and can be included and programmed in a first and/or a second component of a network. The components are connected by a network wherein the first component is adapted as a sender and the second component is adapted as a receiver. The sender has means to send to the receiver a first type of message.
The receiver, in case of being able to handle the first type of message, has means for sending to the sender a second type of message and at least maintains an originator of the first type of message. The sender has means for sending to the receiver a third type of message when the sender is receiving the second type of message. The receiver, when receiving the third type of message, has means for releasing the originator, whereby reliable communication is established. For the case that the receiver receives a second first type of message (635) while maintaining the originator, means are provided for discarding the second first type of message.

The sender is adapted such that if it does not receive the second type of message within a predefined time period, the sender has means for resending the first type of message. The sender may have a timer that is started to measure the predefined time period. The sender may have means for starting the timer each time a first type of message is sent.

The sender may have means for sending at least a first and a second first type of message in a timed sequence respectively marked by a first and a second unique identifier. The receiver then has means for send a first and a second second type of message in the timed sequence that are respectively marked in association with the first and second unique identifier.

The first and second unique identifier can be a sequence number counting the number of messages, wherein the receiver has means such that only the first type of message having the correct sequence number in the counted number of the first type of messages is handled at the receiver.

The sender may have means for starting to send a first type of message having the next higher sequence number as the one of the previously received second type of message, in case the predefined time period has expired between two subsequent first type of messages.

In all the embodiments of the present invention, the first type of message can be a request, and/or the second type of message can be a response and/or the third type of message can be an acknowledgement and/or the connection-less environment can be a communication environment based on a connection-less service of the Unified Protocol. For example, the request can be a GET message and/or the response can be a SET message and execution can be based on a setting of a reserved bit in a header of a protocol data unit of the Unified Protocol.

The present invention also includes a computer program product or a suite of computer program products which provides the functionality of any of the methods according to the present invention when executed on a computing device. Software according to the present invention, when executed on a processing engine, can contain code for establishing reliable communication in a connection-less environment, i.e. to control a sender to send to a receiver a first type of message; to control the receiver in case of being able to handle the first type of message to send to the sender a second type of message and at least maintain an originator of the first type of message, to control, where the sender when receiving the second type of message, to send to the receiver a third type of message; and to control the receiver when receiving the third type of message to release the originator, whereby reliable communication is established.

The software may also be adapted to discard the second first type of message, in case the receiver receives a second first type of message while maintaining the originator.

The software may also be adapted to, when the sender does not receive the second type of message within a predefined time period, control the sender to resend the first type of message.

The software may also be adapted to start a timer in the sender to measure the predefined time period. The timer can be started each time a first type of message is sent.

The software may also be adapted to control the sender to send at least a first and a second first type of message in a timed sequence respectively marked by a first and a second unique identifier; and to control the receiver to send a first and a second type of message in the timed sequence that are respectively marked in association with the first and second unique identifier. The first and second unique identifier can be a sequence number counting the number of messages.

The software may be adapted so that only the first type of message having the correct sequence number in the counted number of the first type of messages is handled at the receiver.

The software may be adapted to control the sender to start sending a first type of message having the next higher sequence number as the one of the previously received second type of message, in case the predefined time period has expired between two subsequent first type of messages.

The first type of message can be a request, and/or the second type of message can be a response and/or the third type of message can be an acknowledgement.

The connection-less environment can be a communication environment based on a connection-less service of the Unified Protocol and the request can be a SET request or GET request message and/or the response can be a SET response or GET response message.

Such a computer program product can be tangibly embodied in a carrier medium carrying machine-readable code for execution by a programmable processor. The present invention thus relates to a carrier medium carrying a computer program product that, when executed on computing means, provides instructions for executing any of the methods as described above. The term "carrier medium" refers to any medium that participates in providing instructions to a processor for execution. Such a medium may take many forms, including but not limited to, non-volatile media, and transmission media. Non-volatile media includes, for example, optical or magnetic disks, such as a storage device which is part of mass storage. Common forms of computer readable media include, a CD-ROM, a DVD, a flexible disk or floppy disk, a tape, a memory chip or cartridge or any other medium from which a computer can read. Various forms of computer readable media may be involved in carrying one or more sequences of one or more instructions to a processor for execution. The computer program product can also be transmitted via a carrier wave in a network, such as a LAN, a WAN or the Internet. Transmission media can take the form of acoustic or light waves, such as those generated during radio wave and infrared data communications. Transmission media include coaxial cables, copper wire and fibre optics, including the wires that comprise a bus within a computer.

## Claims

1. Method for establishing reliable communication in a connection-less environment;
- where a sender (IN) sends to a receiver (TG) a first type of message (415);
- where the receiver (TG) in case of being able to handle the first type of message sends to the sender (IN) a second type of message (420) and at least maintains an originator of the first type of message (430);
- where the sender (IN) when receiving the second type of message sends to the receiver (TG) a third type of message (425); and
- where the receiver (TG) receiving the third type of message releases the originator (435), whereby reliable communication is established.

2. Method according to claim 1, wherein if the sender (IN) does not receive the second type of message within a predefined time period (508, 510) the sender resends the first type of message (530).

3. Method according to any of the previous claims, wherein the sender (IN) starts a timer (505) to measure the predefined time period, or wherein the sender (IN) starts a timer (505) to measure the predefined time period and the timer (505, 515) is started each time a first type of message is sent, and/or wherein the timer (505, 515) is stopped each time a second type of message is received.

4. Method according to any of the previous claims, where in case the receiver (TG) receives a second first type of message (635) while maintaining the originator (645), the second first type of message is discarded.

5. Method according to any of the previous claims, wherein the sender (IN) sends at least a first (733) and a second (735) first type of message in a timed sequence respectively marked by a first and a second unique identifier.

6. Method according to claim 5,
wherein the receiver (TG) sends a first (745) and a second (748) type of message in the timed sequence that are respectively marked in association with the first and second unique identifier.

7. Method according to claim 5 or 6, wherein the first and second unique identifier are a sequence number counting the number of messages; and
wherein only the first type of message having the correct sequence number in the counted number of the first type of messages is handled at the receiver (IN).

8. Method according to claim 7 in combination with claim 2, wherein the sender (IN) starts sending a first type of message (845) having the next higher sequence number as the one of the previously received second type of message (839), in case the predefined time period has expired between two subsequent first type of messages.

9. Method according to any of the previous claims, wherein the first type of message is a request, and/or the second type of message is a response and/or the third type of message is an acknowledge.

10. Method according to any of the previous claims, wherein the connection-less environment is a communication environment based on a connection-less service of the Unified Protocol.

11. Method according to claim 10 in combination with claim 9, wherein the request is a SET request or GET request message and/or the response is a SET response or GET response message.

12. Method according to claim 10 or 11, which is executed based on a setting of a reserved bit (310) in a header of a protocol data unit of the Unified Protocol.

13. System for establishing reliable communication in a connection-less environment,
- having a first and a second component (1010, 1020) connected by a network (RN) wherein the first component is adapted as a sender to implement a method according to any of the claims 1 to 12;
- and the second component (1020) is adapted as a receiver to implement a method according to any of the claims 1 to 12.

14. System (1000) according to claim 13, wherein the first (1010) and/or the second component (1020) is a microprocessor and/or the network (RN) is a reliable network.

15. System (1000) according to any of the claims 13 or 14 that is implemented in a mobile device.

## Amended claims

### Amended claims in accordance with Rule 137(2) EPC.

**1.** Method for establishing reliable communication in a connection-less environment;
- where a sender (IN) sends to a receiver (TG) a first type of message (415);
- where the receiver (TG) in case of being able to handle the first type of message sends to the sender (IN) a second type of message (420) and at least maintains an originator of the first type of message (430);
- where the sender (IN) when receiving the second type of message sends to the receiver (TG) a third type of message (425); and
- where the receiver (TG) receiving the third type of message releases the originator (435), whereby reliable communication is established.

**2.** Method according to claim 1, wherein if the sender (IN) does not receive the second type of message within a predefined time period (508, 510) the sender resends the first type of message (530).

**3.** Method according to any of the previous claims, wherein the sender (IN) starts a timer (505) to measure the predefined time period, or wherein the sender (IN) starts a timer (505) to measure the predefined time period and the timer (505, 515) is started each time a first type of message is sent, and/or wherein the timer (505, 515) is stopped each time a second type of message is received.

**4.** Method according to any of the previous claims, where in case the receiver (TG) receives a second first type of message (635) while maintaining the originator (645), the second first type of message is discarded.

**5.** Method according to any of the previous claims, wherein the sender (IN) sends at least a first (733) and a second (735) first type of message in a timed sequence respectively marked by a first and a second unique identifier.

**6.** Method according to claim 5,
wherein the receiver (TG) sends a first (745) and a second (748) second type of message in the timed sequence that are respectively marked in association with the first and second unique identifier.

**7.** Method according to claim 5 or 6, wherein the first and second unique identifier are a sequence number counting the number of messages; and
wherein only the first type of message having the correct sequence number in the counted number of the first type of messages is handled at the receiver (IN).

**8.** Method according to claim 7 in combination with claim 2, wherein the sender (IN) starts sending a first type of message (845) having the next higher sequence number as the one of the previously received second type of message (839), in case the predefined time period has expired between two subsequent first type of messages.

**9.** Method according to any of the previous claims, wherein the first type of message is a request, and/or the second type of message is a response and/or the third type of message is an acknowledge.

**10.** Method according to any of the previous claims, wherein the connection-less environment is a communication environment based on a connection-less service of the Unified Protocol.

**11.** Method according to claim 10 in combination with claim 9, wherein the request is a SET request or GET request message and/or the response is a SET response or GET response message.

**12.** Method according to claim 10 or 11, which is executed based on a setting of a reserved bit (310) in a header of a protocol data unit of the Unified Protocol.

**13.** System for establishing reliable communication in a connection-less environment,
- having a first and a second component (1010, 1020) connected by a network (RN) wherein the first component is adapted as a sender to implement a method according to any of the claims 1 to 12;
- and the second component (1020) is adapted as a receiver to implement a method according to any of the claims 1 to 12.

**14.** System (1000) according to claim 13, wherein the first (1010) and/or the second component (1020) is a microprocessor and/or the network (RN) is a reliable network.

**15.** System (1000) according to any of the claims 13 or 14 that is implemented in a mobile device.
